# EUROPEAN PATENT APPLICATION

(11) **EP 3 300 595 A1**
(43) Date of publication of application: **04.04.2018**
(21) Application number: 16002101.0
(22) Date of filing: 29.09.2016
(51) Int. Cl.: A01K 45/00, A01K 29/00

(54) **HATCHING, BREEDING, SLAUGHTER, FEEDING AND TRANSPORT MONITORING SYSTEM DEDICATED TO ANIMALS, PARTICULARLY POULTRY**

(71) Applicant: INDYKPOL S.A., 10-370 Olsztyn (PL)
(72) Inventor: Kulikowski, Piotr, Warszawa 04-730 (PL)
(74) Representative: Skubisz, Ryszard

(57) **Abstract**

A hatching, breeding, slaughter, feeding and transport monitoring system dedicated to animals, particularly poultry, comprising an IT network which collects data, a user interface to make entries and changes directly in the system by the user, transport vehicle location equipment and the user supporting software, with an integrated system consisting of five basic stages - HATCHERY, BREEDER, SLAUGHTERHOUSE, FEED and TRANSPORT, which integrate production operations relating to all system users. With such a solution, each production participant is provided with information relating to their operations and the preview of the tabs relating to other users, which allows operational planning, progress monitoring and cost optimisation.

## Description

The present invention relates to a hatching, breeding, slaughter, feeding and transport monitoring system dedicated to animals, particularly poultry.

Patent databases contain patent descriptions relating to individual elements of the system, such as breeding monitoring dedicated to animals, including poultry, and animal slaughter monitoring.

Patent description no. CN103631241 discloses a poultry breeding management system which comprises animal units or cages, data recording equipment, including essentially all sensors, cabling, analytical software, an application and user interface as well as an alarm module. From the unit or cage in which animals are kept, a sensor collects a signal which is sent to the application via the network (by cable) to be analysed by the software. Further, in the user layer, the system displays the analysed information about animal status and sends alarms and alerts. The intelligent poultry breeding management system aids the breeder at each stage of animal growth, i.e. from the chick stage to the moment when the poultry is ready for sale.

Patent description no. PCT/NL2002/000480 discloses a method for processing poultry, comprising the steps of supplying live poultry, stunning, killing and processing the poultry, wherein each production stage is monitored by the installed sensors, especially the duration of each working step, and slaughtered poultry meat is evaluated to determine an optimum value of the meat.

Monitoring systems of individual meat production stages, from hatching to slaughtering, are known from the above-described state of the art; however, there is no monitoring and measurement system which combines basic stages of meat production, such as hatchery, breeder, feed manufacturer and slaughterhouse. According to the invention the hatching, breeding, slaughter, feeding and transport monitoring system dedicated to animals, particularly poultry, comprises an IT network, a user interface, wherein entries and changes are made in the system directly by the user, transport vehicle location equipment and supporting software which collects all data, performs analyses and generates notifications and alarms.

The collection, analysis and monitoring of the poultry production process is divided into five stages: hatching, breeding, slaughterhouse, feed and transport.

The first stage involves HATCHERY, wherein the condition of chicks is monitored from hatching until the transfer to the breeder, whereas, at this stage, the hatchery enters data relating to the initial number in the flock, breed, sex as well as information available about the poultry house, i.e. type and surface area, into the system. While the chick transport is shipped to the ordering party from the hatchery, the breeder can track the transport continuously, including the travel distance and transport duration.

The second stage is BREEDER, wherein the breeder monitors growth of chicks and their health status. Also, the date of slaughter is planned. The breeder monitors data generated by the system and can also make corrections directly in the system, namely corrections relating in particular to the initial number of birds in the flock, the date of introduction into the poultry farm, the selected feeding plan, the average weekly flock weight, flock fattening history, the flock feeding plan, feed consumption; in addition, deaths in the flock and the average weight of birds are calculated on the basis of the information provided. The breeder receives messages providing information about the stage of flock growth and the approximate date of poultry supply operation, and as such the breeder can determine the date of purchasing chicks.

The messages also aid breeders in planning purchases of feed for chicks and chickens.

Another stage involves SLAUGHTERHOUSE, which collects the birds from the BREEDER. At first, the presented information relates to the overview of the supply operation plan, and thus a list of orders, including information about the flock number and sex, the date of the planned supply operation (selective or main), the livestock pickup location and the average weight of birds. The SLAUGHTERHOUSE provides information about transport, including the order number, quantity, the date of transport, driver's data and contact number, the vehicle and trailer registration number, and the loading and unloading time. The SLAUGHTERHOUSE also enters information relating to the supply operation. The supply operation settlement contains the order number, supply operation type, planned quantity, delivered quantity and the difference between the planned and delivered quantities as well as the average planned weight, production performance and the difference between the planned weight and production performance. Additionally, the information to be entered relates to the quality of supply operation, such as the order number and the type of supply operation, live weight, animal description - animals differing in their sizes, overfeeding, and faecal contamination or skin losses on the breast and thigh damage, with the final evaluation of the supply operation.

The FEED stage aids breeders in planning orders and provides the following information: flock number, order type, breed, type and quantity of feed and signature; in addition, the order provides the planned fattening period, the number of birds, the date of introduction and the feeding plan. The generation of collective information on feed demand allows the feed manufacturer to plan the production.

The last stage is TRANSPORT, which links the following stages: HATCHERY - BREEDER - SLAUGHTERHOUSE. The ordering party and the transport recipient are provided with the following information: driver's data, phone number, date of transport, date of delivery, vehicle and trailer registration number and order number Moreover, the transport can be tracked in real time using a satellite navigation system.

Advantages of the hatching, breeding, slaughter, feeding and transport monitoring system dedicated to animals, particularly poultry, include monitoring of the production process at each stage, collection and exchange of information between stakeholders - for instance, between the feed manufacturer and the chick breeder, and between the supply operator and the slaughterhouse - actual transport tracking, as well as availability of slaughter results and comparison of results with other breeders. All the above advantages improve the production process by continuous monitoring; all stakeholders use the system to generate the data they require - for instance, for feed production planning or processing capabilities of the slaughterhouse. The system comprehensively handles the meat production process, poultry meat in particular, which reduces costs of the process, and hence the price of the finished product is lowered.

## Claims

1. The hatching, breeding, slaughter, feeding and transport monitoring system dedicated to animals, particularly poultry, comprising an IT network which collects data, a user interface to make entries and changes directly in the system by the user, transport vehicle location equipment and the supporting software, **characterised in that** the users are provided with an integrated system consisting of five basic stages - HATCHERY, BREEDER, SLAUGHTERHOUSE, FEED and TRANSPORT, which integrate production operations relating to all system users.

2. The system according to claim 1, **characterised In that**, at the HATCHING stage, the status of chicks is monitored from hatching to the moment when the chicks are transferred to the BREEDER, by transfer of data to the system to be analysed and verified on a current basis and messages are generated.

3. The system according to claims 1 and 2, **characterised in that** the HATCHERY user can access data relating to the initial flock number, breed, sex, data relating to the poultry house - type and area, data relating to transport - driver's data, vehicle data - vehicle, trailer, transport data - day and time of delivery, date and time of collection, travel distance and transport duration.

4. The system according to claims 1, 2 and 3, **characterised In that** the HATCHERY stage user can independently enter data into the system and monitor other stages - BREEDER, SLAUGHTERHOUSE, FEED and TRANSPORT.

5. The system according to claim 1, **characterised in that**, at the BREEDER stage, the system monitors the growth of chicks and their health status, and based on the collected information, the system generates messages, including determination of an approximate slaughtering date.

6. The system according to claims 1 and 5, **characterised in that** the BREEDER stage user can access data relating to the initial number of birds in the flock, date of introduction into the farm, the selected feeding plan for chicks, their breed, variety, sex and the average weekly flock weight, as well as flock fattening history, flock feeding plan, feed consumption, as well as deaths, the feeding plan and feed consumption relating to a specific flock.

7. The system according to claims 1, 5 and 6, **characterised in that** the BREEDER stage user can access data relating to the TRANSPORT stage - driver's data, vehicle data (vehicle, trailer), transport data - date and time of delivery, date and time of collection, travel distance and transport duration.

8. The system according to claims 1, 5, 6 and 7, **characterised In that** the BREEDER stage user can independently enter data into the system and monitor other stages - HATCHERY, SLAUGHTERHOUSE, FEED and TRANSPORT.

9. The system according to claim 1, **characterised in that**, at the SLAUGHTERHOUSE stage, the user can access information relating to the overview of the supply operation plan, the list of orders, including information about the flock number and sex, the date of the planned supply operation, information about the supply operation - supply operation type (selective or main), livestock pickup location, order number, planned quantity, delivered quantity and the difference between the planned and delivered quantities, live weight, the average weight of birds, animal description, including the number of animals, overfeeding, faecal contamination, skin losses on the breast and thigh damage, with the final evaluation of the supply operation.

10. The system according to claims 1 and 9, **characterised in that** the SLAUGHTERHOUSE stage user can independently enter data into the system and monitor other stages - HATCHERY, BREEDER, FEED and TRANSPORT.

11. The system according to claim 1 **characterised in that** the FEED stage aids users in feed order planning and supply, providing the following information: flock number, order type, breed, type and quantity of feed and signature; in addition, the system provides data relating to the planned fattening period, the number of birds, the date of introduction and the feeding plan.

12. The system according to claims 1 and 11, **characterised in that** the FEED stage user can independently enter data into the system and monitor other stages - HATCHERY, BREEDER, SLAUGHTERHOUSE and TRANSPORT.

13. The system according to claim 1, **characterised in that**, at the TRANSPORT stage, ordering parties and transport carriers are provided with the following information at each stage: driver's data, phone number, date of transport, date of delivery, vehicle and trailer registration number, order number; additionally, the transport operation can be tracked in real time using a satellite navigation system.

14. The system according to claims 1 to 13, **characterised In that** each system user is provided with information relating to their operations and the preview of the tabs relating to other users, which allows operational planning, progress monitoring and cost optimisation.
